# EUROPÄISCHE PATENTANMELDUNG

(11) **EP 1 028 052 A2**
(43) Veröffentlichungstag der Anmeldung: **16.08.2000**
(21) Anmeldenummer: 00100466.2
(22) Anmeldetag: 11.01.2000
(51) Int. Cl.: B65B 9/10

(54) **Vorrichtung zum Bilden von Artikelgruppen aus stabförmigen Artikeln der tabakverarbeitenden Industrie**

(30) Priorität: 23.01.1999 DE 19902597
(71) Anmelder: TOPACK Verpackungstechnik GmbH, 21493 Schwarzenbek (DE)
(72) Erfinder: David, Harry, 21029 Hamburg (DE)
(74) Vertreter: Herrmann, Günther

(57) **Zusammenfassung**

Die Erfindung betrifft die Bildung von Zigarettengruppen durch übereinandergelegte, mit definierten Leerstellen versehene Zigrettenlagen (12, 13, 14), die am Auslaß von Fallschächten (6) unter Verwendung einer eine Leerstelle erzeugende Zigarettenattrappe (16, 17, 18) angesammelt werden.
Es ist das Ziel, das Überführen einer derartigen Lage (12, 13, 14) längsaxial zur Zigarettenachse in eine Gruppenbildungstasche unter gleichzeitigen queraxialen Zusammenschieben der Zigaretten (15) zu erleichtern.
Erreicht wird dies durch eine queraxiale Beweglichkeit der Zigarettenattrappe (16, 17, 18), die sich einem Querversatz der längsaxial überführten Zigaretten (15) unter Aufrechterhaltung der Leerstelle entsprechend anpassen kann.

## Beschreibung

Die Erfindung betrifft eine Vorrichtung zum Bilden von Artikelgruppen aus Artikellagen von über- und nebeneinanderliegenden stabförmigen Artikel der tabakverarbeitenden Industrie, mit schrittweise vorbewegten Gruppenbildungstaschen sowie mit der Anzahl der Artikellagen entsprechenden, in Schächte unterteilten Trichtern, denen in unterschiedlichen, der jeweiligen Lagenebene entsprechenden Höhenlagen längs der Artikelachse bewegbare Überführungsstößel sowie mit Längsschlitzen der Überführungsstößel korrespondierende stabförmige Artikelattrappen am Schachtauslaß zugeordnet sind.

Vorrichtungen der eingangs bezeichneten Art dienen aus Gründen der Preisgestaltung, der Packungsherstellung und Handhabung dazu, innerhalb von Zigarettenpackungen gleichen Formats bzw. gleicher Außenabmessungen eine oder mehrere Lücken bzw. definierte Leerstellen vorzusehen, d. h. Packungen mit einem gewollt unvollständigen Packungsinhalt zu erzeugen, die damit eine unterschiedliche Anzahl Zigaretten enthalten können.

Hierzu ist es beispielsweise durch die US-PS 4 700 825 bekannt, im Zuge der lagenweisen bzw. blockweisen Formierung des in schrittweise bewegten Transporttaschen eingestoßenen Packungsinhalts den Artikelfluß zu den vorgesehenen Leerstellen zu unterbinden bzw. durch Attrappen zu blockieren.

Der Erfindung liegt die Aufgabe zugrunde, den Blockbildungsprozeß insbesondere beim Überführen lückenhafter Zigarettenlagen in die Transporttaschen zu optimieren.

Diese Aufgabe wird erfindungsgemäß dadurch gelöst, daß die Artikelattrappen queraxial beweglich angeordnet sind.
Die queraxiale Beweglichkeit kann grundsätzlich auf unterschiedliche Weise bzw. durch entsprechende Führungen der Artikelattrappen erreicht werden. Eine einfache bevorzugte Ausgestaltung besteht hingegen darin, daß die Artikelattrappen pendelnd aufgehängt sind. Hierbei ist es besonders zweckmäßig, wenn sich die Pendelaufhängung schachtaufwärts erstreckt, was für eine weitere vorteilhafte Ausgestaltung nutzbar gemacht werden kann, indem die Pendelaufhängung ein den Schachteinlaß absperrendes Verschlußglied aufweist, welches darüber hinaus zweckmäßigerweise dachförmig ausgebildet ist, um im Vorrat absinkende Artikel seitlich in benachbarte Fallschächte abzuleiten.

Der mit der Erfindung erzielte Vorteil besteht darin, daß die beim längsaxialen Einschub der Zigarettenlagen in die Transporttaschen erforderliche, eine Kompromierung der Blockformation bewirkende queraxiale Zusammenschiebung der Zigaretten auf eine die Zigaretten schonende Weise erleichtert wird, indem sich die eine Phantomzigarette bildende Zigarettenattrappe jeder Querverlagerung der Zigaretten im Zuge ihrer längsaxialen Einschubbewegung anpaßt.

Die Erfindung wird nachfolgend anhand eines in der Zeichnung dargestellten Ausführungsbeispiels näher erläutert.

Hierbei zeigen:
- Figur 1: eine schematische Seitenansicht einer Zuführstation für Zigaretten an einer Packmaschine,
- Figur 2: die Zuführstation in der Draufsicht,
- Figur 3: die Zuführstation mit einem zugeordneten Taschenförderer für Zigarettengruppen und
- Figur 4: die Einrichtung gemäß Figur 3 in der Draufsicht.

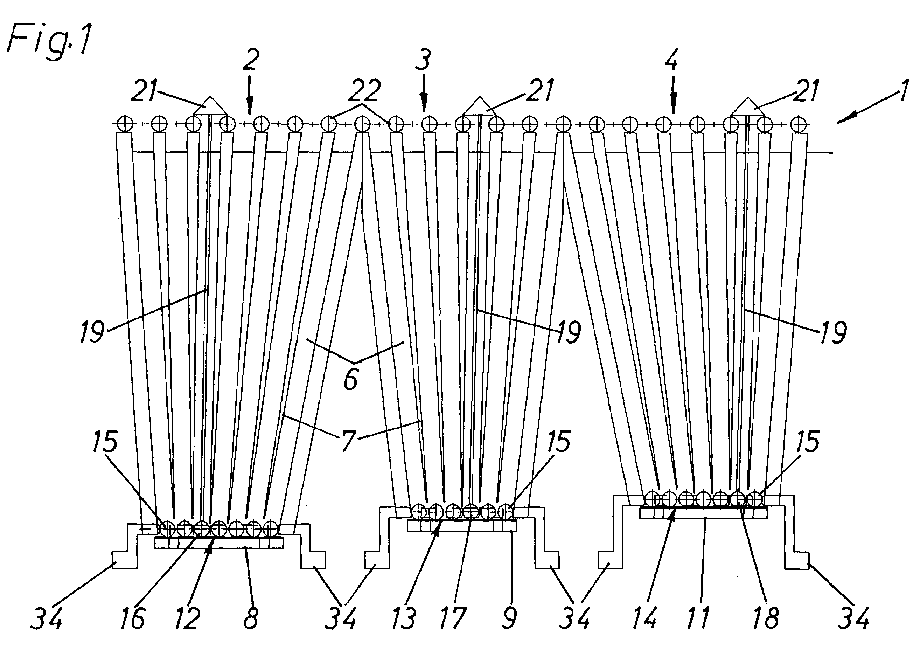

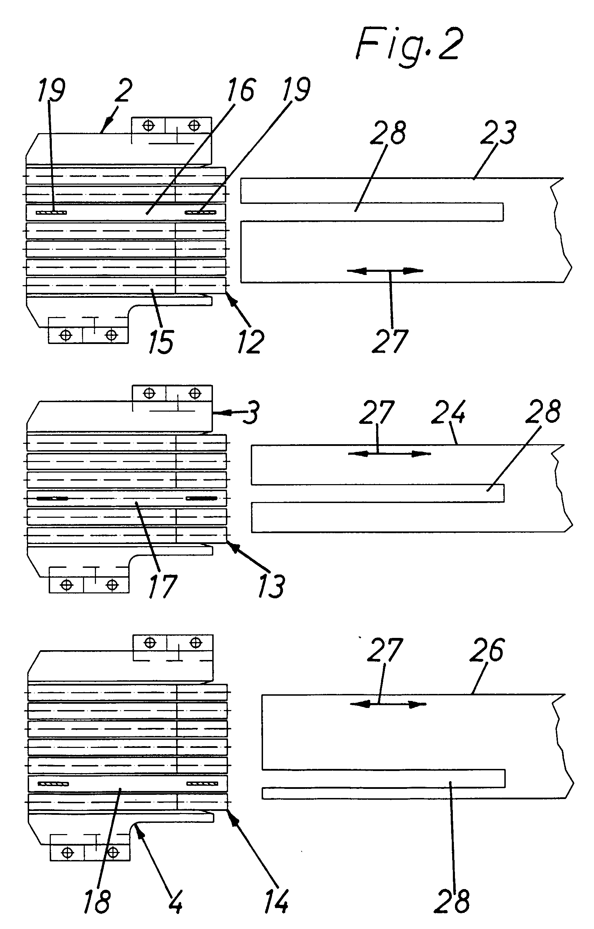

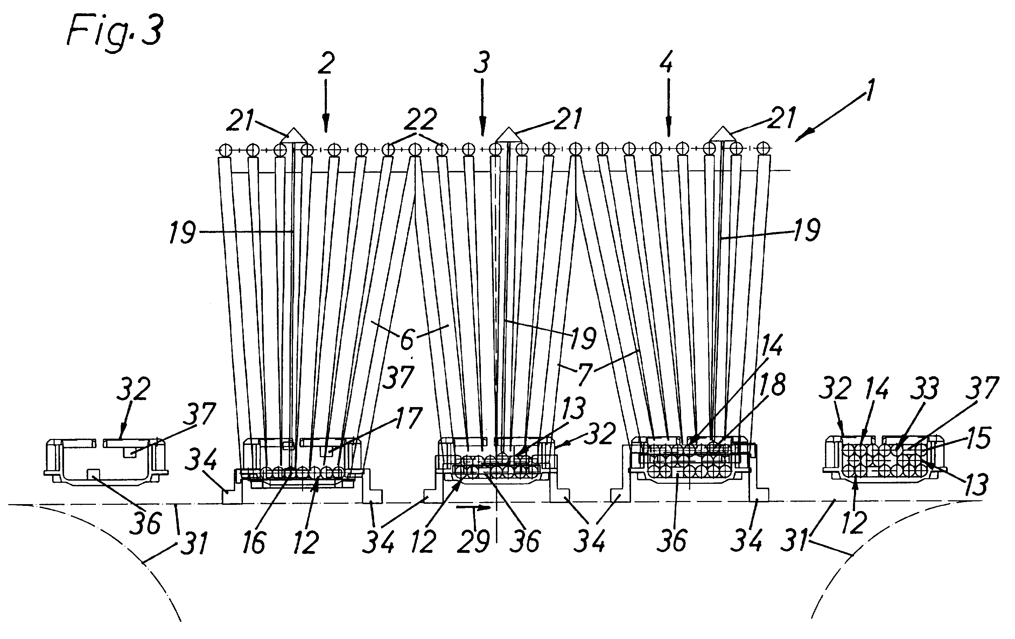

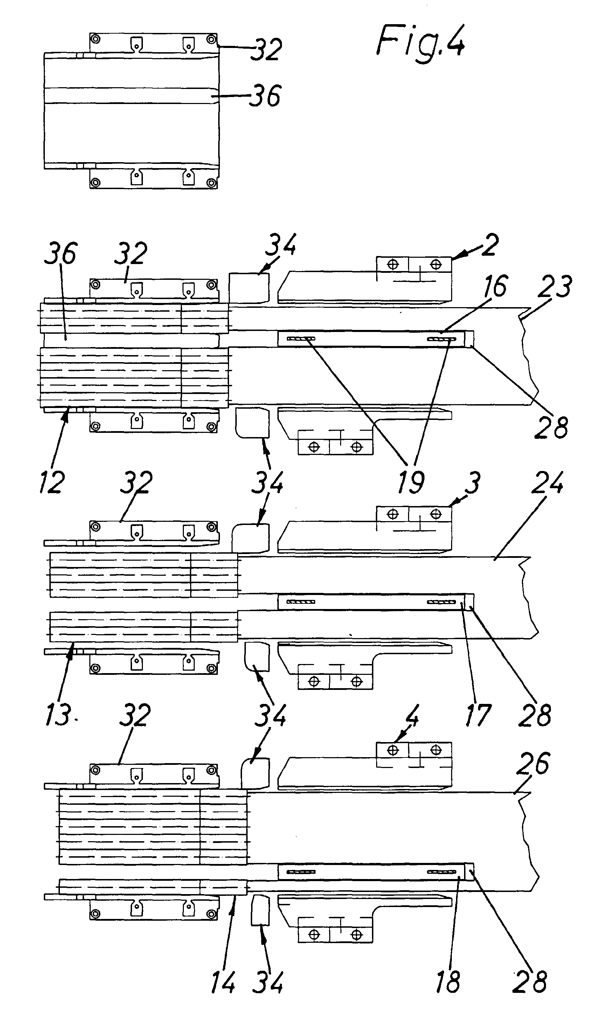

Ein nicht weiter dargestellter Vorratsbehälter der in Figur 1 gezeigten Zuführstation 1 teilt sich unterseitig in drei nebeneinander angeordnete Zuführtrichter 2, 3 und 4 auf, welche jeweils in mehrere Fallschächte 6 unterteilt sind, deren Begrenzungswände 7 jeweils oberhalb einer Plattform 8 bzw. 9 bzw. 11 enden. Die Plattformen 8 bis 11 sind auf unterschiedlichen, abgestuften Ebenen angeordnet, wobei der Höhenunterschied zwischen zwei aufeinanderfolgenden Plattformen 8, 9 bzw. 9, 11 wenigstens gleich einem Zigarettendurchmesser ist.
Auf den Plattformen 8 bis 11 werden jeweils unvollständige Lagen 12, 13, 14 aus nebeneinanderliegenden Zigaretten 15 gebildet. Zu diesem Zweck ist jeweils am Auslaß eines Fallschachtes 6 eines jeden Zuführtrichters 2, 3, 4 eine Zigarettenattrappe 16; 17; 18 querbeweglich angeordnet. Die auf unterschiedliche Weise realisierbare Querbeweglichkeit wird in der dargestellten bevorzugten Weise durch eine Pendelaufhängung 19 der Zigarettenattrappen 16 bis 18 erreicht, die sich jeweils schachtaufwärts erstreckt und ein den Schachteinlaß absperrendes dachförmiges Verschlußglied 21 aufweist. Das Verschlußglied 21 verhindert eine Befüllung des jeweiligen unterseitig durch die Zigarettenattrappen 16; 17; 18 gesperrten Fallschachtes 6 und lenkt nachfallende Zigaretten 15 zum Einlaß der benachbarten Fallschächte 6 ab. Die Fallschächte 6 begrenzende drehbare Stäbe 22 unterstützen eine kontinuierliche Schachtbefüllung.
Gemäß Figur 2 sind den Zuführtrichtern 2 bis 4 rückseitig jeweils in der Ebene der auf den abgestuften Plattformen 8, 9, 11 gebildeten Zigarettenlagen 12 bis 14 Überführungsstößel 23, 24, 26 zugeordnet, welche in Richtung des Doppelpfeils 27 hin- und herbewegbar sind und in einem mit der Position einer Zigarettenattrappe 16, 17, 18 des jeweiligen Zuführtrichters 2 bis 4 korrespondierenden Bereich mit einer Ausnehmung in Form eines sich in Bewegungsrichtung (Peil 27) erstreckenden Längsschlitzes 28 versehen sind.
Auf der Vorderseite der Zuführtrichter 2 bis 4 ist gemäß den Figuren 3 und 4 ein strichpunktiert angedeutetes, in Pfeilrichtung 29 umlaufendes Taschenfördermittel 31 angeordnet, welches in regelmäßigen Abständen mit Transporttaschen 32 zum Bilden von dreilagigen Zigarettengruppen 33 besetzt ist.
Gemäß den Figuren 3, 4 sind zwischen den Zuführtrichtern 2 bis 4 und den während einer Rastphase des Taschenfördermittels 31 in einer Überführungsstellung positionierten Transporttaschen 32 die auf der jeweiligen Ebene der Plattformen 8, 9, 11 gebildeten Zigarettenlagen 12 bis 14 seitlich beaufschlagende Lagenausrichter 34 vorgesehen.
In Figur 3 sind aufeinanderfolgende Transporttaschen 32 in unterschiedlichen Befüllungszuständen während ihres Transports in Pfeilrichtung 29 des Taschenfördermittels 31 in den jeweiligen Überführungspositionen in Höhe der Plattformen 8, 9, 11 der Zuführtrichter 2 bis 4 dargestellt.
Am Zuführtrichter 2 wird eine erste Lage 12 aus Zigaretten 15 unter Bildung einer Lücke bzw. einer definierten Leerstelle durch die Zigarettenattrappe 16 in die Tasche 32 durch einen Vorhub des Überführungsstößels 23 eingestoßen, wobei sich die Zigarettenattrappe 16 einem seitlichen Versatz bzw. einer Komprimierung der Lage 12 beim Passieren des Lagenausrichters 34 bzw. beim Einschub in die Transporttasche 32 automatisch durch eine entsprechende seitliche Ausweich- bzw. Pendelbewegung oder axiale Schrägstellung anpaßt. Auf diese Weise werden schädigende Quer- bzw. Scherkräfte auf die Zigaretten verhindert und eine Verlagerung und Aufrechterhaltung der erzeugten Lücke bzw. Leerstelle gewährleistet.

Innerhalb der Transporttasche 32 sichert eine Abstandsrippe 36 am Taschenboden die erzeugte Leerstelle in der ersten Lage 12.
Auf die gleiche Weise wird eine zweite Lage 13 von der Plattform 9 des Zuführtrichters 3 in die entsprechend positionierte Transporttasche 32 überführt, wobei sich die einzelnen Zigaretten 15 jeweils in eine Mulde zwischen zwei Zigaretten der ersten Lage 12 legen. Die durch die Zigarettenattrappe 17 erzeugte Leerstelle in der Lage 13 wird dabei ohne Hilfsmittel in der Transporttasche 32 aufrechterhalten.

Bei der auf gleiche Weise von der Plattform 11 überführten dritten Lage 14 wird die durch die Zigarettenattrappe 18 erzeugte Leerstelle wiederum durch eine Abstandsrippe 37 an der oberen Taschenwandung aufrechterhalten.
Im folgenden Herstellungsprozeß werden die aus drei Zigarettenlagen 12 bis 14 mit drei definierten Leerstellen formierten Zigarettengruppen unter Aufrecherhaltung dieser Formation in Verpackungsmaterial eingehüllt bzw. eingestoßen.

## Patentansprüche

1. Vorrichtung zum Bilden von Artikelgruppen aus Artikellagen von über- und nebeneinanderliegenden stabförmigen Artikeln der tabakverarbeitenden Industrie, mit schrittweise vorbewegten Gruppenbildungstaschen sowie mit der Anzahl der Artikellagen entsprechenden, in Schächte unterteilten Trichtern, denen in unterschiedlichen, der jeweiligen Lagenebene entsprechenden Höhenlagen längs der Artikelachse bewegbare Überführungssstößel sowie mit Längsschlitzen der Überführungsstößel korrespondierende stabförmige Artikelattrappen am Schachtauslaß zugeordnet sind, dadurch gekennzeichnet, daß die Artikelattrappen (16, 17, 18) queraxial beweglich angeordnet sind.

2. Vorrichtung nach Anspruch 1, dadurch gekennzeichnet, daß die Artikelattrappen (16, 17, 18) pendelnd aufgehängt sind.

3. Vorrichtung nach Anspruch 2, dadurch gekennzeichnet, daß sich die Pendelaufhängung (19) schachtaufwärts erstreckt.

4. Vorrichtung nach Anspruch 2 oder 3, dadurch gekennzeichnet, daß die Pendelaufhängung (19) ein den Schachteinlaß absperrendes Verschlußglied (21) aufweist.

5. Vorrichtung nach Anspruch 4, dadurch gekennzeichnet, daß das Verschlußglied (21) dachförmig ausgebildet ist.
